# EUROPEAN PATENT APPLICATION

(11) **EP 2 438 828 A1**
(43) Date of publication of application: **11.04.2012**
(21) Application number: 10186672.1
(22) Date of filing: 06.10.2010
(51) Int. Cl.: A45B 15/00, A45B 25/18, B60P 3/025

(54) **A canopy device and vehicle comprising the canopy device**

(71) Applicant: Leif Eriksen Import-Export ApS, 5700 Svendborg (DK)
(72) Inventor: Eriksen, Torben Hyrup, 81800, Rabastens (FR)
(74) Representative: Holme Patent A/S

(57) **Abstract**

A canopy device (1) comprising a canopy top (2,3) provided with a detachable skirt (5) along a free edge (15). The canopy device has a detachable skirt (4) that comprises a plurality of circumferentially distributed detachable distension members (5) for keeping the skirt (4) radially distended from the free edge (15) of the canopy top (2,3). The canopy device (1) is provided at a vehicle that comprises a means for preparing food where the canopy top can be lowered to cover said means.

## Description

The present invention relates to a canopy device or similar structure that it capable of providing shade and shielding items below the device.

The invention relates in particular to a canopy device comprising a canopy top provided with a detachable skirt along a free edge, and a vehicle comprising the canopy device.

US patent nr. 003037811 A1 relates to an umbrella forming a canopy over a table and a chair. The umbrella has an attachable/detachable skirt having mating hook and loop fasteners positioned on the skirt and interior edge of the umbrella. The skirt consist of a plurality of pieces of sewed together pieces of cloth fastened to the interior hem of the umbrella and extending circumferentially around the periphery of the umbrella. The skirt hangs freely from the peripheral rim of the open umbrella with its seams in extension of the seams of the umbrella. This known skirt it intended for hanging freely down from the umbrella so that the message on it can be seen by persons walking by, moreover it is not distended and will flutter in the wind.

It is a main aspect according to the present invention to provide a canopy device of the kind mentioned in the opening paragraph that is particular easy to erect and collapse.

It is a second aspect according to the present invention to provide a canopy device of the kind mentioned in the opening paragraph that is dimensionally stable even under windy conditions.

It is a third aspect according to the present invention to provide a vehicle including a canopy device of the kind mentioned in the opening paragraph, where the vehicle is configured for preparing food and the canopy device can be utilised for protection the food preparation facilities on the vehicle.

The novel and unique whereby these and other aspects are achieved according to the present invention consist in the fact that the detachable skirt comprises a plurality of circumferentially distributed detachable distension members for keeping the skirt radially distended from the free edge of the canopy top. The distension members constitutes a simple means to keep the skirt distended when the skirt is mounted to the canopy top without depriving the skirt the capability of being folded together when detached from the canopy top. At the same time the detachable skirt gives the canopy device a larger diameter or outline than the canopy top itself, so that the assembled canopy device covers a larger area than an ordinary umbrella or parasol without skirt.

In a preferred embodiment the canopy top may comprise a skeleton or frame structure and/or a hood configured to cover the skeleton structure. In particular a rigid skeleton confer dimensional stability to the canopy top. Thus the purpose of the skeleton structure may be to maintain same shape and dimension of the canopy top irrespective of how it is manipulated, and the canopy top may be configured not to be foldable. A preferred skeleton or frame structure may be a lightweight skeleton or frame structure consisting of a plurality of interconnected wires, rods or thin tube, e.g. of metal or a hard plastic material, e.g. a fibre-reinforced plastic. The skeleton or frame structure can be covered with a hood of a fabric or other suitable material to complete the canopy top by enclosing the skeleton or frame. The skirt may be made of the same as or other material than the hood. Preferably, at least the hood but preferably also skirt are made of a watertight and/or water repelling material to offer protection against rain and snow and dryness to persons and objects being below the combined canopy top, hood and skirt. In an alternative embodiment the canopy top may be constituted by the hood alone, in which case the hood for example can be a unit piece moulded article.

The skeleton structure may comprise an annular ring part and a plurality of bend spokes, thin rods, tubes, pipes and/or wires, radiating from the annular ring part and converging towards each other in the direction away from the annular ring part. Spokes, thin rods, tubes, pipes and/or wires can be alternatives but can also be used in combination.

Preferably the spokes, thin rods, tubes, pipes and/or wires converge towards each other in a converging plane substantially parallel to the plane comprising the annular ring part. In this expedient the hood-covered skeleton or frame structure constitutes the canopy top. This canopy top appears as bowl having a cavity delimited by a substantially flat bottom which in use of the canopy device constitutes the roof of the canopy top. A circumferential wall surrounds the roof and serves to create the distance between the plane of the annular ring part and the converging plane. When the skirt is assembled to the canopy top the skirt extends from a free edge of this circumferential wall just like the brim on a bowler hat. Although the bend spokes, thin rods, tubes, pipes and/or wires in this embodiment are bend at an angle of substantially 90° and are substantially L-shaped, other angles, bends and curvatures are foreseen within the scope of the present invention. In an alternative embodiment the spokes, thin rods, tubes, pipes and/or wires may radiate from the annular ring part via a substantially S-shaped curve so that spokes, thin rods, tubes, pipes or wires meet in a cone-shaped centre part instead of a flat centre part. The skeleton or frame structure appears as a web of bend spokes, thin rods, tubes, pipes or wires serving to keep the hood in a distended state so that it looks like the crown of a hat.

The canopy device may comprise a pole for erecting the canopy device, and the canopy top may have engagement means for engaging the pole, so that the position of the canopy top on the pole can be adjusted and fixed according to need and desire. Preferably the engagement means can be configured to be displaceable along the pole. The engagement means may be integral with the skeleton or frame structure, e.g. in the form of tubular part extending from a central part of the canopy top and having a tensioning screw extending radially inside the bore of the tubular part to provide a means to fix the position of the canopy top on the pole when tensioned. The hood may have a hole arranged above the internal diameter of the engagement means to allow the pole to pass through the hood too, thereby making it possible to insert the pole into the engagement means prior to vertically displacing the canopy top along the pole to any desired position. A tubular part may have an internal diameter larger than the exterior diameter of the pole so that the pole is able to pass easily into the tubular part.

The skirt may be divided in at least two separate skirt parts so that size and weight of the parts to be mounted on the canopy top are reduce thereby making it much faster and less burdensome to assemble the canopy device than if the skirt was one single part. The separate skirt part may have means for being combined at their joining end to close the brim of the canopy device.

The skirt may have means for coupling with the distension members, preferably the means for coupling with the distension members are radiating channels for at least partly receiving elongated distension members, such as spokes, thin rods, tubes, pipes or wires, that are easily accommodated inside such a channel. The channels may be provided simply by sewing up folds in the skirt. The channels may be distributed along the skirt in a number corresponding to the number of distension members. Alternatively the means for coupling with the distension member can be hooks or eye through which the distension members can pass and be retained.

In order to obtain a reliable securing of the skirt to the canopy top a coupling end of a distension member may be configured with a hooking means for coupling to the skeleton or frame structure, preferably coupling to a node between the annular ring part and a spoke, thin rod, tube, pipe or wire.

A particular reliable hooking means may comprise a first part configured for coupling around a spoke, thin rod, tube, pipe or wire at a node, which first parts extends into a second part configured for engaging the annular ring part. By means of this configuration of a hooking means the distension member cannot move along the annular ring but is still very easy to demount and mount to the skeleton or frame structure of the canopy top. The first part may be U-shaped and catches around a spoke, thin rod, tube, pipe or wire at a node while the second part including the free end of the distension member is passed below the annular ring part to advantageously serve to retain the angular relationship of the radiating a spoke, thin rod, tube, pipe or wire in relation to plane of the annular ring part when the distension members are suspended on the annular ring, optionally also loaded by the accompanying skirt.

Hooking means for two oppositely facing skirts parts are advantageously mirror-inverted to further facilitate mounting and demounting from various locations by both right-handed and left-handed persons.

A specific design of an expedient embodiment of a hooking means will be described in more detail below with reference to the drawing.

In case of the overhanging canopy top being a hard moulded shell the hooking means may instead be L-shaped and the short leg of the L introduced in corresponding holes provided along the edge of the shell and kept in place by the load of the skirt.

The invention further relates to a vehicle comprising the above described canopy device.

The inventive vehicle advantageously comprises a means for preparing food and the canopy top is vertically displaceable along the pole between a lower position in which the canopy top enclosed and covers the means for preparing food and an upper position in which the canopy top is arranged at a distance from the means for preparing food. The vehicle is e.g. a bicycle, a scooter or other vehicle without roof, that can be furnished with equipment for preparing food. An operator can move between locations with the canopy device demounted and the canopy top in the lower position hiding and shielding the means for preparing food. When the operator arrives at the intended location where the food is to be prepared he/she mounts the canopy device and displaces the canopy top with the radially extending skirt upwards along the pole, secures it to the pole at the suitable position where it protects the means for preparing food as well as the operator standing near by from both sun, rain, dust and other environmental factors, foreseen and not foreseen.

The vehicle according to the present invention is particularly intended for preparing hot food. To this aspect the vehicle may comprise a trunk and a heating source inside the trunk. The heating source may e.g. be a gas cylinder or a solid fuel, such as charcoal.

The means for preparing food may comprises two hotplates, e.g. arranged on top of the trunk to facilitate powering of the hotplates. In this embodiment the pole may preferably be erectable between the two hotplates, so that the canopy device covers both of them. The vehicle may also comprise a dispenser detachable and/or rotatable mounted to the pole for dispensing a substance to be processed on any of the hotplates.
If e.g. the food to be prepared is pancakes the dispenser may contain liquid pancake batter and include a valve that can be opened and closed as required to dispense the dose directly on the hotplate be rotating the dispenser into such a position. The vehicle may further comprise a screen from guarding the buyers of the hot food items from splashing and guarding the food items from being contaminated if people in the vicinity e.g. cough or sneeze. The hot plates may be detachable and the vehicle comprises special transport casings for them. Also the vehicle may comprise a separate bracket or mounting to keep the pole firmly fixed during transport.

The hot plates may be configured as frying-pans with hollows in which to cook aebleskiver, as waffle iron, or be used to make tortillas. This list is not exhaustive.

It is essential to the present invention that the canopy top can be lowered to cover and enclose the means for preparing food, in the present embodiment the hot plates situated on the trunk.

A suitable vehicle is a three-wheeled carrier cycle with a oval trunk obtainable from nihola cykler aps, Ingerslevsgade 100, DK-1705 Copenhagen V, and described in Danish patent no. DK173102. An oval trunk is spacious and the top of the trunk can be covered with a plate adapted for mounting the hot plates in communication with the gas source inside the trunk. Various kitchen utilities can be arranged suspended around the trunk and the pole can be secured to the trunk either extending into the trunk to be extra stable or be screwed into the top plate of the trunk. The trunk can also provide space for the detachable skirt and for cleaning utensils, food supplies, etc.

The invention will be described below in further details with reference to the accompanying drawing that illustrates exemplary embodiments only. The shapes and dimensions of the components of the invention shown in the drawing shall not be taken to limit the invention to such shapes and dimensions, since many more are intended within the scope of the appended claims.
Fig. 1 is an exploded perspective view oblique from above of an exemplary embodiment of a canopy device according to the present invention,
fig. 2a shows the skeleton structure shown in fig. 2 seen from inside the cavity of the canopy top,
fig. 2b shows the same with a pole inserted in the engagement means of the skeleton structure, where the pole is seen in a fragmentary view,
fig. 3a and fig. 3b shows an enlarged perspective views of two mirror-inverted distension members,
fig. 3c shows an enlarged perspective view of the distension members shown in fig. 3a from another angle,
fig. 4 shows an enlarged scale perspective view of the distension member coupled to a node between the annular ring part and a spoke of the skeleton structure of the canopy top,
fig. 5 shows in an enlarged perspective view a distension member inserted in a channel in a skirt,
fig. 6 shows the canopy device in an assembled erected state,
fig. 7 is a perspective view of a three-wheeled cycle equipped with the canopy device, where the canopy device is erected,
fig. 8 shows the dispenser means in a fragmentary view,
fig. 9 shows the means for preparing food where one of the hot plates are demounted the cooker on top of the trunk of the cycle seen in fig. 7, and
fig. 10 show a front view of the vehicle seen in fig. 6 with the canopy device collapsed and the canopy top used to cover the cooker arranged on top of the trunk of the cycle.

In the following it is assumed that the canopy top is oval-shaped and that the skeleton structure is composed of tubular spokes and tubular rings. Many other shapes are intended within the scope of the present invention. Moreover, use of the term "spoke" should not be construed as limiting. The term "spoke" also encompasses thin rods, tubes, pipes or wires or other similar structures suitable for shaping the skeleton structure into e.g. a dimensionally stable doom, crown or similar bowl-shaped structure. The skeleton structure is shown to be made of tubular part but could quite as well be made of flat parts, in which case the corresponding distension members and its hooking means are shaped to received flat parts at a node.

The canopy device 1 has a skeleton structure 2, a hood 3 and two skirt parts 4a,4b, which can be secured to the skeleton structure 2 by means of a plurality of distensions members 5. In the case shown a total number of twelve distension members 5 is used, which distention members 5 include one first set of six identical distension members 5a and one second set of six identical distension members 5b, which are mirror-inversions of the distension members 5a of the first set of distension members, as will be described later in more details with reference to the subsequent figures.

A pole 6 serves to erect the canopy device 1 by vertically displacing at least the canopy top 2,3 along the pole 6's length. To that aspect the skeleton structure 2 and the hood 3 has concentric tubular engagement means 7 and centre hole 8, respectively, through which hole 8 the pole 6 can pass. The internal diameter of the tubular engagement means 7 and centre hole 8 is larger than the exterior diameter of the pole 6, to facilitate smooth unobstructed sliding during displacement.

The skeleton structure 2 constitutes an open frame or web made of a plurality of interconnected tubular bend parts. The skeleton structure 2 has an annular ring part 9 forming a base part 9 wherefrom a plurality of bend spokes 10 in the form of substantially L-shaped spokes 10 protrudes from one first end 12a in order to meet at a second end 12b by converging said second end 12b towards a common centre at the tubular engagement means 7 in a plane above the plane of the annular ring part 9. The L-shaped spokes 10 are in the case shown substantially evenly distributed along the annular ring part 9 and are secured to the annular ring part 9 at nodes 11 between the short legs of the L-shaped spokes 10 and the annular ring part 9. The longer legs of the L-shaped spokes 10 are the parts of said L-shaped spokes 10 that together forms a gridlike roof or frame above the plane of the annular ring part 9 in order to support the hood 3 when said hood 3 is mounted on the skeleton structure 2. Although the roof is shown to be flat and having a further stiffening ring 13 this feature is optional in case the components of the skeleton structure otherwise are self-supporting and dimensional stable. The tubular engagement means 7 may e.g. be sufficient to keep the skeleton structure dimensional stable, more or less spokes can be provided, the spokes can be flat, the spokes can be bend in another manner, the spokes can have more nodes due to several extra stiffening rings or spokes, and the roof can be domed or tapered or have other preferred design. The skeleton structure 2 may be made of lightweight materials, such as aluminium, other lightweight metals or dimensional stable and durable plastic materials in order to be erected without substantial effort, and even be erected by persons not having huge muscular strength.

The hat-crown-shaped hood 3 is configured of a total of twelve tapering bend hood parts 14 that are sewn together along side seams 14' in order to obtain a shape and design corresponding to the exterior shape and design of the skeleton structure 3 to cover said structure 3. The side seams 14' of the hood parts 14 can also be glued or fused together if considered more expedient and depending on the nature of the selected hood material. At the tapering of the hood parts 14, said hood parts meet at the centre hole 8, which centre hole may be provided with an optional enforcement ring or other wear resisting means to better resist friction when the pole 6 is displaced inside the centre hole 8. Along the perimeter 15 of the hood 8 said hood 8 has a plurality of securing means 16 to secure the hood 8 to the skeleton structure 2. In the case shown the securing means 16 are hook and loop fasteners 16 between two adjacent side seams 14', however other securing means 16 are foreseen within the scope of the present invention, including but not limited to tie strings, hooks and/or elastic straps and combinations thereof. An elastic strap terminating in a hook and provided along the perimeter is easy and fast to fasten on to the annular ring part 9 and de-fasten from said annular ring part 9, e.g. at the sections of the annular ring part 9 between two consecutive nodes 11, while hook and loop fasteners 16 constitute a very inexpensive means that preferably can be tied around both the spokes 10 and the annular ring part 9 at the nodes 11 to prevent movement along said annular ring part 9.

The two skirt parts 4a,4b are substantially crescent to fit the perimeter 15 of the hood 3 and the curvature of the annular ring part 9 of the skeleton structure 2, so to ensure tight joining between the skirt parts 4a,4b and the hood 8, so that any gap there between are closed, and passage of matter, such as rain, snow and dirt coming from above the hood and the skirt, are prevented, and objects below the assembled canopy device 1 can be kept dry and protected.

Each skirt parts 4a,4b have means for coupling with the distension members in the form of six channels 17a,17b, respectively, for detachably receiving a respective distension member 5a,5b. However a distension member could also be permanently received in a corresponding channel since the skirt part can still be folded or rolled up to reduce its bulk volume during storage when the canopy device is not in use. The distension member can be secured or attached to the skirt in other manners, e.g. the means for coupling with the distension members can be small pockets provided along the exterior-most perimeter of the skirt to receive just an end part of a distension member when the skirt is assembled to the hood, or the means for coupling with the distension members can be one or more eyes through which the distension member is passed. Any kind of means for coupling with the distension members are foreseen within the scope of the present invention provided that the distension members are able to keep the skirt firmly distended and secured to the canopy top 2,3.

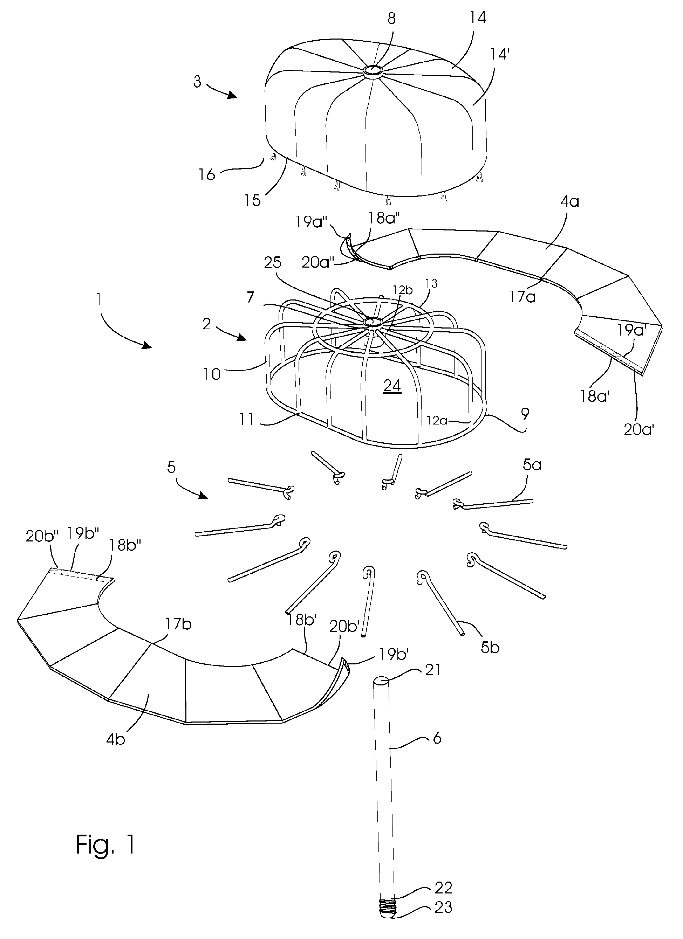

Each cresent-shaped skirt parts 4a,4b have free ends 18a',18a"; 18b',18b ", respectively, provided with attachment means 19a',19a";19b',19b", respectively, so as to combine the two skirt parts 4a,4b into the complete skirt 4, in the present embodiment represented by the brim 4 surrounding the hat crown shaped canopy top 2,3. Suitable attachment means 19a',19a "; 19b',19b " are strips of hook and loop fasteners arranged along the free edges 20a', 20a"; 20b', 20b"on both radial free sides of the skirt parts 4a,4b. In fig. 1 the channels and some other features including the thickness of the skirt are magnified for illustrative purposes only in order to make these features more apparent and clear to the reader.

The pole 6 has a first end 21 for passing through the concentric tubular engagement means 7 of the skeleton structure 2 and the centre hole 8 in the hood 3 and an opposite second end 22 having a screw thread 23 for securing the pole in a socket (not shown).

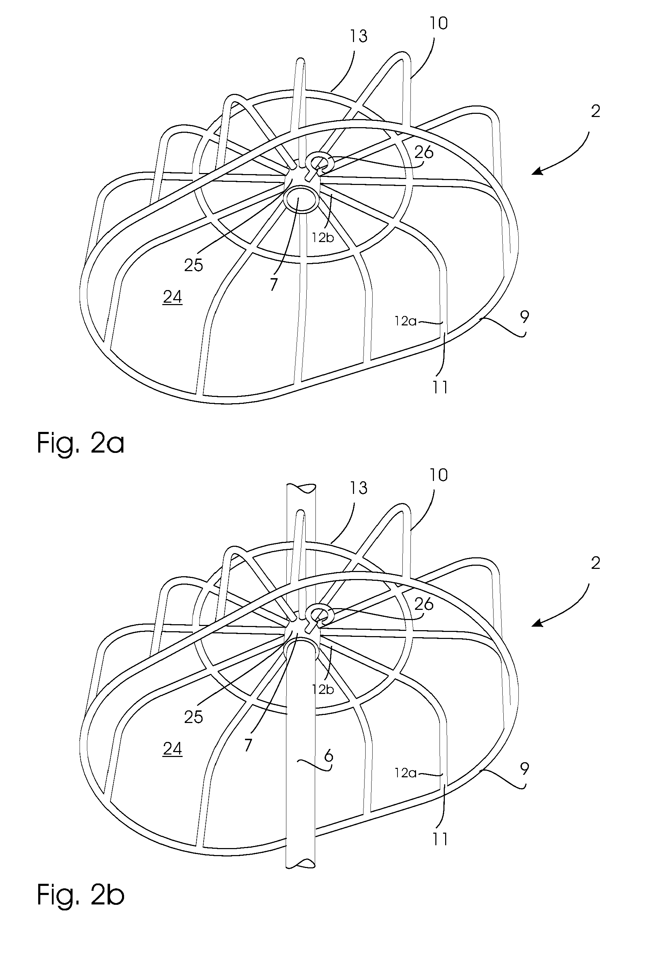

In fig. 2a the skeleton structure 2 is seen oblique from below to illustrate that a cavity 24 is defined by the web/grid constituted by the annular ring part 9, the stiffening ring 13, and the twelve spokes 10, which second ends 12b of the spokes 10 meet at the common centre where the tubular engagement 7 means are situated and is secured to said tubular engagement means 7.

The tubular engagement means 7 comprises a hollow pipe part 25 and a screw part 26 to be screwed substantially perpendicular towards the axis of the pipe part 25 and an inserted pole 6 in order to engage the pole 6 and keep the canopy top 2,3 in a selected height above the second end 22 of said pole 6, as illustrated in fig. 2b.

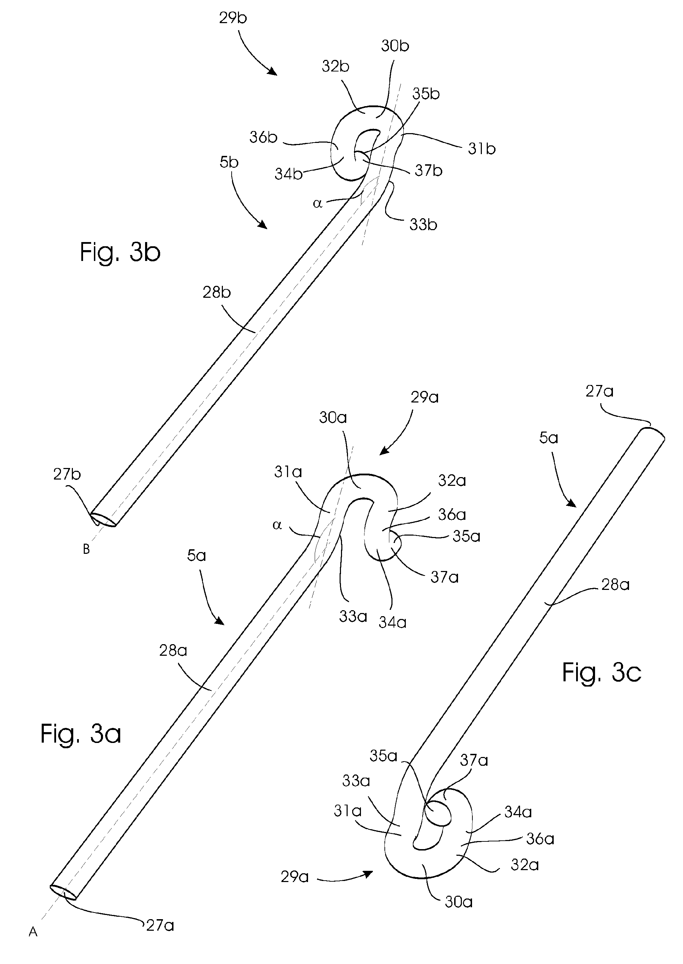

The structure of two mirror-inverted distension members 5a,5b are illustrated in the enlarged scale perceptive views of figs. 3a, 3c and 3b, respectively, where the distension members 5a,5b are seen from different angles to better illustrate their twisted coupling ends.

The distension member 5a has a free end 27a, to be inserted in a channel 17a of the skirt part 4a, which free end 27a extends via an elongated distension part 28a and terminates into a right-twisted coupling end 29a constituting the hooking means 29a. The mirror-inverted distension member 5b has a free end 27b that extends via an elongated distension part 28b and terminates into a left-twisted coupling end 29b constituting the hooking means 29b. The hooking means 29a,29b of the mirror inverted distension members 5a,5b are substantially identical expect from being mirror-inverted.

The hooking means 29a for the first kind of a distension member 5a, seen in fig. 3a and fig. 3c has a first part 30a configured for coupling around the spoke 10 at a node 11. This first part 30a is substantially U-shaped in order to receive the spoke 10 between the opposing first legs 31a and second leg 32a of said first part 30a, where the first leg 31a extends into the elongated distension part 28a via a slightly bend part 33a to create an angle α to the elongated distension part 28a, and the second leg 32a is, seen in the orientation used in fig. 3a, offset to the right from the axis A of the elongated distension part 28a and substantially parallel to said elongated distension part 28a. The plane extending through the parallel legs 31a,32a of the U-shaped first part 30a is angled to intersect the axis of the elongated distension part 28a. Preferably, the angle α is blunt in order that the skirt 4, when mounted to the hood 8, drops slightly from the hood 8. The second leg 32a of the first part 30a extends via a bend 34a towards a free end 35a to create a second part 36a of the hooking means 29a, which second part 36a also is substantially U-shaped. The first leg of the U-shaped second part 36a is also the second leg 32a of the first part 30a, which second leg 32a extends via the bend 34a into the second leg 37a of the second part 36a. The second part 36a is thus configured for engaging the annular ring part 9 from below when the first part 30a is arranged around the spoke 10. In the present embodiment the plane taken through the substantially parallel legs 32a,37a of the second part 36a is substantially parallel to the axis A of the elongated distension part 28a and perpendicular to the plane taken through the first part 30a, however the second leg 37a could also be angled to protrude below the first part 30a.

The hooking means 29b for the second kind of a distension member 5b is seen in fig. 3b. The only difference between the first kind of hooking means 29a and the second kind of the hooking means 29b are that they are mirror-inverted so that their second part 36b is situated to the left instead of to the right of the elongated distension part 28b, as seen in fig. 3b using the orientation of the views of fig. 3a and fig. 3b.

Accordingly, the hooking means 29b for the second kind of a distension member 5b, seen in fig. 3b, has a first part 30b configured for coupling around the spoke 10 at a node 11. This first part 30b is substantially U-shaped in order to receive the spoke 10 on the half part of the annular ring part 9 opposite the half part where the first kind of a distension member 5a is intended used. To opposite half parts of the annular ring part 9 corresponding skirt parts 4a,4b are to be attached and secured. The spoke 10 is received between the opposing first legs 31b and second leg 32b of said first part 30ab, where the first leg 31b extends into the elongated distension part 28b via an slightly bend part 33b to create an angle α, and the second leg 32b is, using the orientation seen in fig. 3b, offset to the left in relation to the axis B of the elongated distension part 28b and located substantially parallel to said elongated distension part 28b. The plane extending through the parallel legs 31b,32b of the U-shaped first part 30b is angled to intersect the axis B of the elongated distension part 28b. The second leg 32b of the first part 30b extends via a bend 34b towards a free end 35b to create a second part 36b that also are substantially U-shaped. The first leg of the U-shaped second part 36b is also the second leg 32b of the first part 30b, which second leg 32b extends via the bend 34b into the second leg 37b of the second part 36b, which second leg 37b also could be bend below the first part 30b.

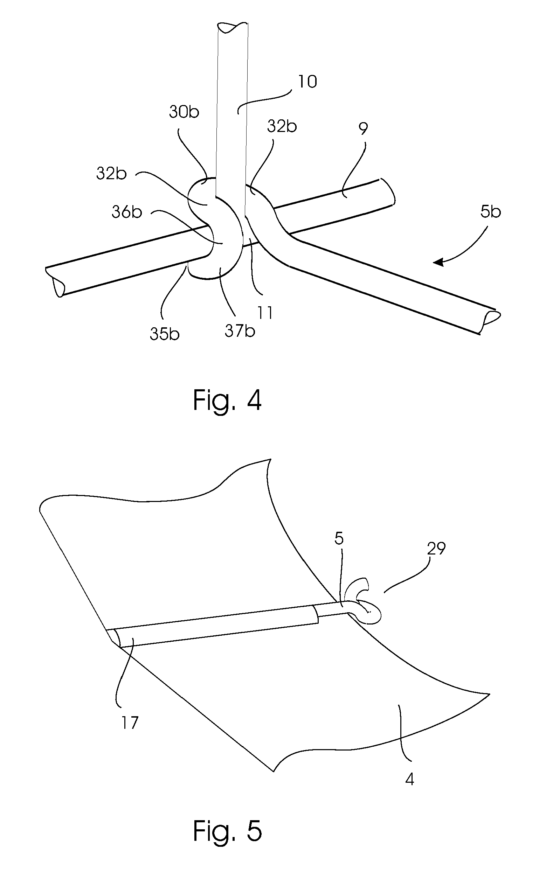

The second part 36b is thus configured for engaging the annular ring part 9 so that the second leg 37b is below the annular ring part 9, as seen more clearly in the enlarged fragmentary view of fig. 4, where the first part 30b also are arranged around the spoke 10 at a node 11. In the present embodiment the plane taken through the substantially parallel legs 32b,37b of the second part 36b is substantially parallel to the axis of the elongated distension part 28b and perpendicular to the plane taken through the first part 30b. The first part 30b abuts the upper side of the annular ring part 9 while accommodating the spoke in between said two legs.

This configuration of hooking means 29a,29b constitutes a firm and reliable coupling together of skeleton structure and distension members which coupling also facilitate easy and fast attachment of the skirt to the hood. The distension members can at the same time surround the spokes at a node, engage the spoke, serve as a backstop to prevent the distension members from dropping as well as to distend the skirt when the distension members are provided in the channels.

Fig. 5 shows a fragmentary view of a distension member inserted in a channel 17 of a skirt part 4. The coupling end 29 protrudes from the channel to facilitate coupling to a node 11.

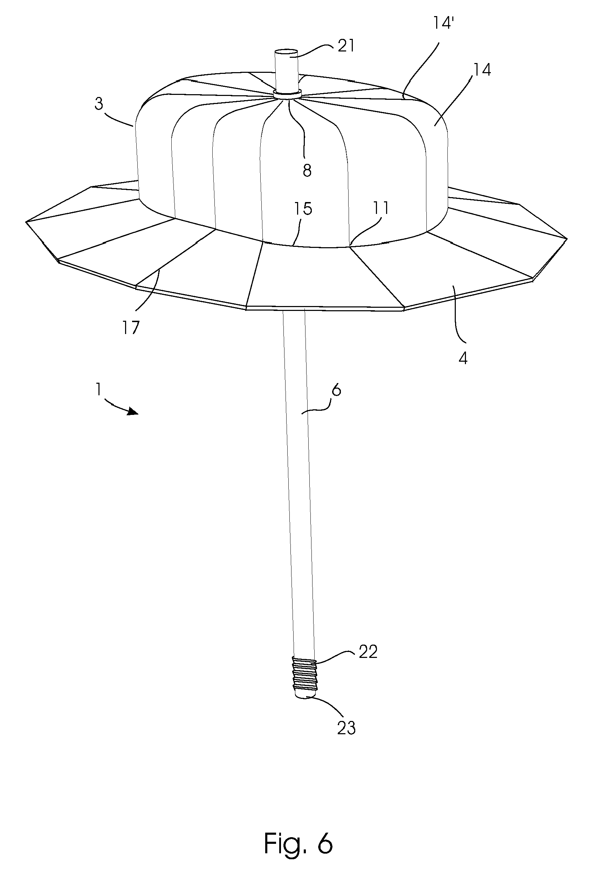

Fig. 6 shows the canopy device in the erected state where the skirt parts 4a,4b are combined to a full skirt 4 that surrounds the hood 3 and is joined to said hood 8 along its perimeter 15. The first end 21 of the pole 6 protrudes above the hood 8. The protruding part of the pole can be sized just as desired depending of how height the canopy top 2,3 is intended raised.

The canopy device according to the present invention is particular useful for use on a vehicle for preparing food. The food may be a hot meal prepared on one or more chosen locations.

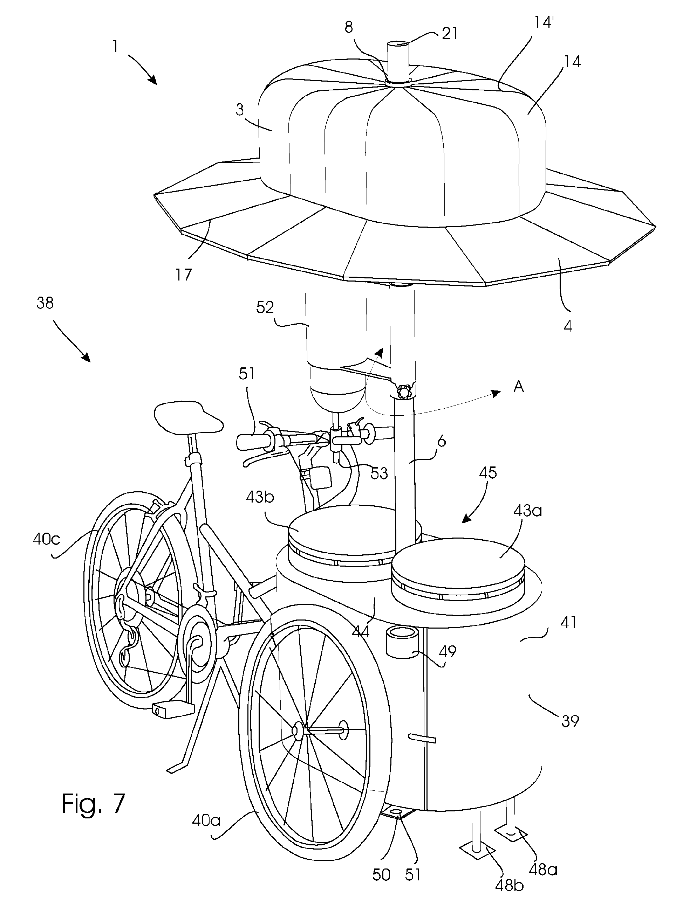

An exemplary vehicle 38 with an erected canopy device 1 is shown in fig. 7. The vehicle 38 is a tricycle 38 having a trunk 39 situated between opposing front wheels 40a,40b of which only one is visible in fig. 7, a back wheel 40c, and a handlebars 41. The trunk 39 has a door 42 for accessing the trunk 39. A gas supply (not shown) for supplying gas to a means for preparing food, in the present case two hot plates 43a,43b are stored inside the trunk 39. Thus the top 44 of the trunk 39 is equipped as a gas cooker 45 for preparing food. The means for preparing food could in the alternative be an electric cooker, a refrigerator or a deep-freeze powered by a battery inside the trunk. The battery may be rechargeable to be plugged on at a charging station, e.g. a charging stations used for charging electric vehicles, or can be powered by solar cells provided e.g. on the canopy device. Optionally also the vehicle 38 can be electrically powered.

The hot plates 43a,43b are flat plates of heat conducting metal and designed for making pancakes. Preferably the hot plates 43a,43b are detached from the subjacent gas jets 46a,46b when the vehicle 38 is moving. In the detached state the hot plates 43a,43b are stored in casings (not shown) that e.g. can be secured to a luggage carrier (not shown) of the vehicle 38. The vehicle 38 has a parking stand 47 to prevent the vehicle 38 from unintentional running when the cooker 45 is operated. Additional arrester foots 48a,48b are provided below the trunk 39, so ensure that the cooker 45 is kept in a stable and fixed position during preparation of the food. The arrester foots 48a,48b is retracted when the vehicle is moving. A tubular holder 49 protrudes from the trunk side above a web 50 with a threaded hole 51. When the pole 6 is not used to keep the canopy top 2,3 erected, the pole 6 can be inserted through the holder 49 with its second threaded end 23 firmly screwed to the web 50 so that the pole 6 is fixed and secured during running the vehicle 38.

The canopy top 2,3 is raised above the top 44 of the trunk 39 at a suitable distance that allow an operator of the gas cooker 45 appropriate space to work below the canopy device's combined protective hood 8 and skirt 4.

A dispenser means 52 for dispensing a content of a liquid food product directly on the hot plates 43a,43b is mounted on the pole 6 so that a dispenser nozzle or tip 53 on the dispenser means in turns can be disposed above the respective hot plates 43a,43b as indicated with the double-pointed arrow A in fig. 7.

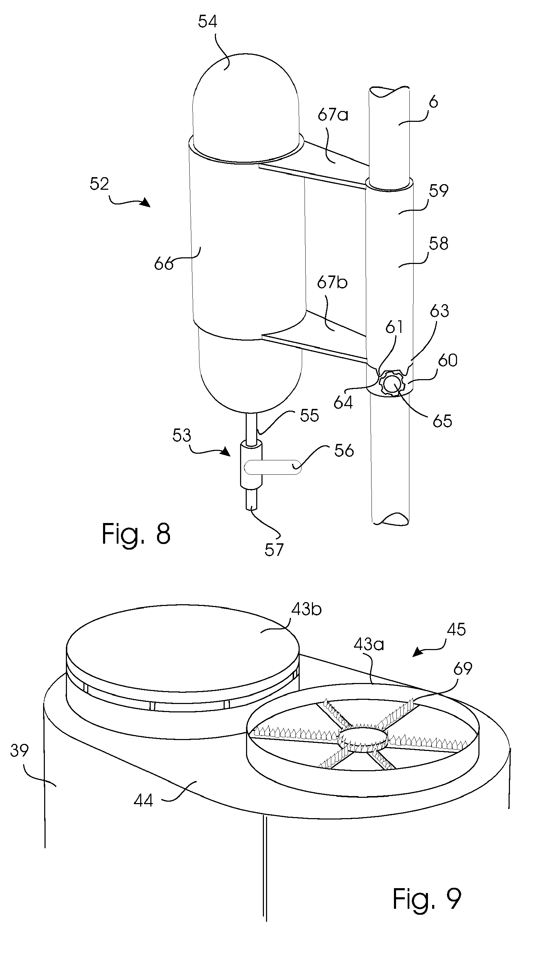

The dispenser means 52 is seen in an enlarged scale perspective view in fig. 8. The dispenser means 52 includes a container 54 for the liquid pancake batter. The container 54 has a nozzle means 53 including a dispenser tube 55 with a pivotable tap 56 to open and close the diameter of the dispenser tube 55 in order to dispense a dose of pancake batter or other liquid food product through the free opening 57 of the dispenser tube 55. The dispenser means 52 further includes a mounting 58 for mounting the dispenser means displaceable and/or rotateable on the pole 6. The mounting 58 has a first tubular part 59 and a second tubular part 60 that can interlock due to interacting locking means 61,62 provided on respective tubular parts 59,60, to arranged the dispenser tube 55 above a hotplate 43, such as above the centre of the hot plate 43 to allow the pancake batter to spread over said hot plate. In the present case the locking means are configured as a tongue means 61 at the end 63 of the first tubular part 59 opposite the second tubular part 60, which second tubular part 60 has a corresponding groove means 64 for accommodating and locking said toque 61 in a fixed position in relation to the pole 6 and the hot plates 43. The second tubular part 60 has a retaining screw 65 to be screwed substantially perpendicularly to the pole 6 to fasten the dispenser means 42 in the appropriate position and height above the cooker 45, and in particularly at a height appropriate for the liquid food product to hit the hot plate 43 without splashing to all sides during dispensing. A tubular dispenser holder 66 is secured to the first tubular part 58 by means of two distance pieces 67a,67b radiating from the first tubular part 58 so that when the first tubular part 58 is rotated in position above the hot plate the length of the distance pieces 67a,67b is sufficient to allow dispensing substantially at the centre of a hot plate. The interior diameter of the tubular holder 66 is adjusted in relation to the shape and dimensions of a replaceable container 54, so that the container 54 cannot pass completely through the tubular holder 66. Alternative embodiments of dispenser means may have only one distance piece, or be an integral unit. Any of the container 54 or the entire dispenser means 52 may be reusable or disposable.

In the fragmentary view of the cooker 45 seen in fig. 9 the hot plate 43b is demounted and the fire 69 is visible, while the other hot plate 43a is still mounted.

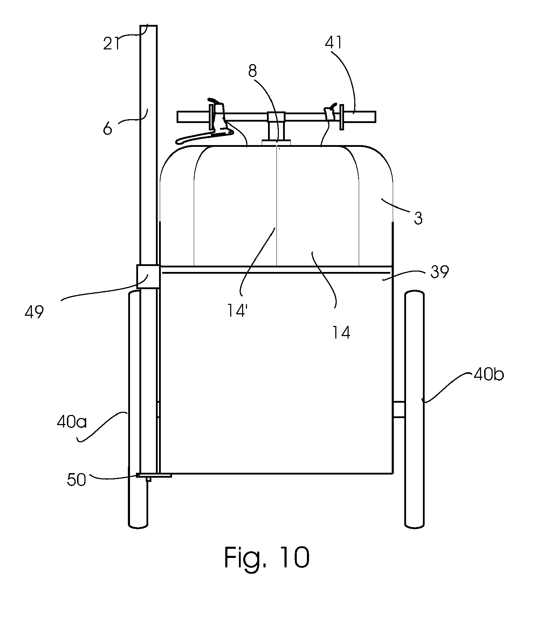

In the front view of fig. 10 of the vehicle 38 the canopy device 1 is collapsed and the skeleton structure 2 with the hood 8 is expediently used as a lid or cover over the cooker 45 to protect the hot plates 43a,43b from environmental influence. The pole 6 is arranged inside the holder with the threaded end 23 firmed screwed into the hole so that when the vehicle 38 is running no parts can fall off. Other items such as the skirt, kitchen utensils, holders for kitchen utensils, cleanings agents, a protective screen and/or food products are expediently stored in the trunk during running. Holders for kitchen utensils can e.g. be fitted to the handlebars of the vehicle of to a part of the trunk or any other appropriate site on the vehicle within reach of the operator of the cooker.

Once the driver of the vehicle reaches the next location for intended food production, in the present case pancakes, he/she opens the trunk, mounts the pole with the dispenser means vertically in relation to the cooker and disposed between the hot plates, displaces the canopy top away from the cooker, and secures the canopy appropriate vertically above said cooker, whereafter the two skirt parts are mounted to the skeleton structure as described above. The container is arranged above the hot plates ready to dispense pancake batter, and other tools are mounted to the vehicle within appropriate distance for the operator/driver, and the cooker is turned on. The hole erecting and collapsing procedure takes less than 15 minutes.

The vehicle according to the present invention brightens up the streets and can be used wherever appropriate to deliver a hot or cold food product to consumers. An energy-efficient vehicle can be a pedal-operated cycle, e.g. having a green hood, skirt and trunk to demonstrate its environment-friendliness to the customers.

Vehicles including means for preparing both hot and cold food are foreseen within the scope of the present invention. Thus a vehicle equipped with both a means for keeping food product at low temperature as well as a means for preparing hot food are also contemplated.

The canopy device may comprise more than one skirt of different size and colour. The radial extent of the same canopy top fitted with the skirt is the same irrespective of its position on the pole. By having skirts and distension member of various sizes the radial extent of the assembled canopy device can be varied in an expedient manner using the same canopy top.

## Claims

1. A canopy device (1) comprising a canopy top (2,3) provided with a detachable skirt (4) along a free edge (15), **characterised in that** the detachable skirt (4) comprises a plurality of circumferentially distributed detachable distension members (5) for keeping the skirt (4) radially distended from the free edge (15) of the canopy top (2,3).

2. A canopy device (1) according to claim 1, **characterised in that** the canopy top (2,3) comprises a skeleton and/or a frame structure (2) and/or a hood (3) configured to cover the skeleton and/or frame structure (2).

3. A canopy device (1) according to claim 2, **characterised in that** the skeleton structure (2) comprises an annular ring part (9), and a plurality of bend spokes (10), thin rods, tubes, pipes and/or wires radiating from the annular ring part (9) and converging towards each other in the direction away from the annular ring part (9) towards a common assembling site.

4. A canopy device (1) according to any of the claims 1, 2 or 3, **characterised in that** the canopy device (1) comprises a pole (6) for erecting the canopy device (1), and the canopy top (2,3) has engagement means (7;25,26) for engaging the pole (6), preferable the engagement means (7;25,26) are configured for being displaceable along the pole (6).

5. A canopy device (1) according to any of the preceding claims 1 - 4, **characterised in that** the skirt (4) comprises at least two separate skirt parts (4a;4b).

6. A canopy device (1) according to any of the preceding claims 1 - 5, **characterised in that** the skirt (4) has means (17) for coupling with the distension members (5), preferably the means (16) for coupling with the distension members (5) are radiating channels (17a;17b) for at least partly receiving elongated distension members (5a;5b).

7. A canopy device (1) according to any of the preceding claims 1 - 6, **characterised in that** a coupling end (29a;29b) of a distension member (5a;5b) is configured with a hooking means (29a;29b) for coupling to the skeleton or frame structure (2), preferably coupling to a node (11) between the annular ring part (9) and a spoke (10), thin rod, tube, pipe and/or wire.

8. A canopy device (1) according to claim 7, **characterised in that** the hooking means (29a;29b) comprises a first part (30a;30b) configured for coupling around the spoke (10), thin rod, tube, pipe and/or wire at a node (11), which first parts (30a;30b) extends into a second part (36a;36b) configured for engaging the annular ring part (9).

9. A canopy device (1) according to claim 8, **characterised in that**
the first part (30a) is substantially U-shaped with a first leg 31a and a second leg (32a),
- the first leg (31a) extends into an elongated distension part (28a) via a slightly bend part (33a) to create an angle (α) to the elongated distension part (28a),
- the second leg (32a) is offset from an axis (A) of the elongated distension part (28a) and substantially parallel to said elongated distension part (28a), and
the second part (36a) is substantially U-shaped and
- includes the second leg (32a) of the first part (30a) that extends via a bend (34a) into a second leg (37a) towards a free end (35a).

10. A canopy device (1) according to claim 9, **characterised in that** a plane taken through the substantially parallel legs (32a,37a) of the second part (36a) is substantially parallel to the axis (A) of the elongated distension part (28a) and substantially perpendicular to the plane taken through the first part (30a).

11. A canopy device (1) according to any of the preceding claims 1, 4 - 10, **characterised in that** canopy top is a unit piece moulded shell structure.

12. A vehicle (38) comprising the canopy device (1) according to any of the preceding claim, **characterised in that**
- the vehicle (38) comprises a means (45) for preparing food, and
- the canopy top (2,3) is vertically displaceable along the pole (6) between a lower position in which the canopy top (2,3) encloses and covers the means (45) for preparing food and an upper position in which the canopy top (2,3) is arranged at a distance from the means (45) for preparing food.

13. A vehicle (38) according to claim 12, **characterised in that**
- the means (45) for preparing food comprises two hotplates (43a,43b),
- the pole (6) is erectable between the two hotplates (43a,43b), and wherein
- the vehicle (38) comprises a dispenser means (52) detachable and/or rotatable mounted to the pole (6) for dispensing a substance to be processed on any of the hotplates (43a,43b).

14. A method of erecting the canopy device (1) according to any of the preceding claims 1 - 11 on a vehicle (38) according to any of the claims 12 or 13, **characterised in that** the method comprises the steps of
- mounting the pole (6) with the dispenser means (52) vertically between the hot plates (43a;43b),
- displacing the canopy top (2,3) away from the hot plates (43a;43b),
- securing the canopy top (2,3) within reach vertically above said hot plates (43a,43b),
- mounting the skirt parts (4a,4b), and
- optionally adjusting the vertical position of the canopy top (2,3) with the skirt (4) on the pole (4).

15. Use of the vehicle (38) according to any of the claims 10 or 12 for making pan-cakes.
